# EUROPÄISCHE PATENTSCHRIFT

(11) **EP 3 224 495 B1**
(45) Veröffentlichungstag und Bekanntmachung des Hinweises auf die Patenterteilung: **03.10.2018**
(21) Anmeldenummer: 15808338.6
(22) Anmeldetag: 17.11.2015
(51) Int. Cl.: F16D 25/00, F16D 25/08, F16D 48/02

(54) **KUPPLUNGSBETÄTIGUNGSVORRICHTUNG**
CLUTCH ACTUATION DEVICE
DISPOSITIF DE COMMANDE EMBRAYAGE

(30) Priorität: 28.11.2014 DE 102014224376
(43) Veröffentlichungstag der Anmeldung: 04.10.2017
(73) Patentinhaber: Schaeffler Technologies AG & Co. KG, 91074 Herzogenaurach (DE)
(72) Erfinder: BARRERA, Alan, 76133 Karlsruhe (DE); HONSELMANN, Sebastian, 77886 Lauf (DE); GLEBOV, Alexander, 77815 Bühl (DE)
(86) Internationale Anmeldenummer: PCT/DE2015/200506
(87) Internationale Veröffentlichungsnummer: WO 2016/082828

(56) Entgegenhaltungen:
- WO-A1-2015/110106
- DE-A1- 2 104 934
- DE-A1- 2 834 145
- DE-A1-102012 214 310
- US-A1- 2006 042 906

## Beschreibung

Die Erfindung betrifft eine Kupplungsbetätigungsvorrichtung, insbesondere ein Ausrücksystem für eine Reibungskupplung eines Kraftfahrzeugs.
Eine hydraulische Kupplungsbetätigung einer Reibungskupplung wird üblicherweise mittels einer Kupplungsbetätigungsvorrichtung im Antriebsstrang eines Kraftfahrzeuges durchgeführt. Bekannt ist, dass mittels der hydraulischen Kupplungsbetätigungsvorrichtung mit einem Geberzylinder und einem Nehmerzylinder unter Verwendung mechanischer Komponenten, wie beispielsweise einem Ausrücklager und einer Kupplungstellerfeder, die Reibungskupplung betätigt werden kann. Typischerweise wird der Nehmerzylinder durch den Geberzylinder betätigt, wobei die Druckkammern des Nehmerzylinders und des Geberzylinders über eine hydraulische Druckleitung miteinander verbunden sind. Ein Kolben des Geberzylinders wird typischerweise durch ein Pedal, beispielsweise ein Fußpedal, mit einer Druckkraft beaufschlagt. Diese Druckkraft erzeugt einen hydraulischen Druck in der Kupplungsbetätigungsvorrichtung, mit dem der Nehmerzylinder und schließlich die Reibungskupplung betätigt werden.
Zur Erhöhung des Fahrkomforts ist es bekannt, die Reibungskupplung automatisch zu betätigen, indem das Kupplungspedal weggelassen wird und ein Automatikgetriebe für den Antriebsstrang des Kraftfahrzeuges vorgesehen wird. Jedoch kann es vom Fahrer gewünscht sein, selbst zu kuppeln und/oder selbst zu schalten und dies nicht einem Automatiksystem zu überlassen.

Eine automatische hydraulische Kupplungsbetätigungsvorrichtung mit der Möglichkeit jederzeit vom Fahrer unter Verwendung von Pedalendschalter und Steuerventilen übersteuert zu werden ist aus DE-A-2 104 934 bekannt. Hiervon ausgehend liegt der vorliegenden Erfindung die Aufgabe zugrunde, Maßnahmen aufzuzeigen, die ein komfortableres Schalten eines Handschaltgetriebes ermöglichen ohne dem Fahrer des Kraftfahrzeuges die Möglichkeit zum eigenen Eingreifen zu nehmen. Es soll eine Kupplungsbetätigungsvorrichtung angegeben werden, die durch den Fahrer anwählbar ist oder die selbsttätig Kupplungsvorgänge übernimmt. Dabei soll insbesondere zu jedem Zeitpunkt eine manuelle Betätigung der Kupplung möglich sein.

Die Aufgabe wird durch die Merkmale des unabhängigen Patentanspruchs 1 gelöst. Vorteilhafte Weiterbildungen sind Gegenstand der abhängigen Patentansprüche.

Die Erfindung betrifft eine Kupplungsbetätigungsvorrichtung, insbesondere ein Ausrücksystem für eine Reibungskupplung eines Kraftfahrzeugs, mit einem Geberzylinder und einem Nehmerzylinder sowie einem Aktor, über den Geberzylinder und Nehmerzylinder mit einer Druckleitung verbunden sind, wobei der Aktor eine durch einen Motor in einer axialen Richtung bewegbare Welle aufweist mit mindestens zwei beweglich darauf angeordneten Kolben, die in einem gemeinsamen Zylinder entlang der axialen Richtung verfahrbar sind, wobei eine erste Druckkammer zwischen erstem Kolben und zweitem Kolben und eine zweite Druckkammer zwischen zweitem Kolben und einer Stirnwand des Zylinders angeordnet sind; wobei eine erste Feder den ersten Kolben und einen ersten Anschlag an der Welle verbindet, und eine zweite Feder den zweiten Kolben mit einem zweiten Anschlag an der Stirnwand verbindet, wobei die zweite Feder den zweiten Kolben gegen einen dritten Anschlag an der Welle verschiebt; wobei ein Anschluss für eine erste Druckleitung zum Geberzylinder in die erste Druckkammer mündet und ein Anschluss für eine zweite Druckleitung zum Nehmerzylinder in die zweite Druckkammer in einem Bereich mündet, der keine Dichtfläche für den zweiten Kolben bildet; wobei zwischen der erstem Druckkammer und der zweiten Druckkammer ein erster Bypass vorgesehen ist, über den eine fluidtechnische Verbindung von Geberzylinder und Nehmerzylinder möglich ist, wobei der erste Bypass verschließbar ist durch Verschieben der Welle und des dritten Anschlags und damit des zweiten Kolbens entlang einer ersten Richtung.

Gemäß einer anderen Ausgestaltung ist zwischen dem ersten Kolben und dem zweiten Kolben ein dritter Kolben beweglich auf der Welle angeordnet und damit eine dritte Druckkammer zwischen dem dritten Kolben und dem zweiten Kolben gebildet. Eine dritte Feder verschiebt den dritten Kolben gegen den dritten Anschlag. Der erste Bypass ist verschließbar durch Verschieben der Welle und des dritten Anschlags und damit des dritten Kolbens entlang einer entgegengesetzten zweiten Richtung. Ein zweiter Bypass ist zwischen der zweiten Druckleitung und der dritten Druckkammer vorgesehen, der durch ein Überdruckventil verschließbar ist, wobei der zweite Bypass geöffnet ist, wenn ein erster Druck in der ersten Druckleitung um einen vorbestimmten Wert kleiner ist als ein zweiter Druck in der dritten Druckkammer.

Eine solche Kupplungsbetätigungsvorrichtung ist in Kraftfahrzeugen mit Handschaltgetriebe einsetzbar. Der Aktor übernimmt das Auskuppeln (Ausrücken der Reibungskupplung) wenn der Fahrer sich dies wünscht (Anwählbar über eine entsprechend eingerichtete Anwahleinrichtung) oder wenn die Fahrsituation dies erfordert (in bestimmten Situationen, wie z. B. Fahren im Stau, beim Parken oder Segeln).

Insbesondere sind hydraulische Druckflächen des ersten Kolbens und des zweiten Kolbens gleich groß.

Bevorzugt ist an der Stirnwand des Zylinders eine Öffnung vorgesehen, durch die die Welle sich erstreckt.

Insbesondere ist eine nicht selbsthemmende Kugelumlaufspindel als Gewindetrieb für die Welle vorgesehen. So kann sichergestellt werden, dass bei ausgeschaltetem Aktor die Welle durch den zweiten Kolben und durch den dritten Anschlag in der zweiten Richtung so zurückbewegt wird, dass der Druck im Nehmerzylinder sinkt und die Reibungskupplung wieder einrückt. Insbesondere ist also eine Federkraft der Reibungskupplung (z. B. einer Tellerfeder) ausreichend, um den zweiten Kolben in der zweiten Richtung zu verschieben und die Reibungskupplung einzurücken.

Es wird weiter ein Verfahren zur Kupplungsbetätigung vorgeschlagen, zumindest aufweisend eine erfindungsgemäße Kupplungsbetätigungsvorrichtung, wobei eine manuelle Betätigung der Kupplungsbetätigungsvorrichtung erfolgt, indem über eine Betätigung des Geberzylinders der erste Kolben und damit der erste Anschlag sowie die Welle und der dritte Anschlag in einer zweiten Richtung so verfahren wird, dass der erste Bypass offen ist und eine fluidtechnische Verbindung von Geberzylinder und Nehmerzylinder gegeben ist.

Eine automatische Betätigung der Kupplungsbetätigungsvorrichtung erfolgt, indem die Welle und damit der dritte Anschlag und der zweite Kolben in der ersten Richtung so verschoben wird, dass der erste Bypass verschlossen wird, so dass bei einem weiteren verschieben entlang der ersten Richtung ein Fluid aus der zweiten Druckkammer hin zum Nehmerzylinder überführt wird.

Insbesondere ist die erste Feder, wenn der erste Kolben sich am fünften Anschlag befindet, um eine Strecke gespannt, wobei diese Strecke dem Öffnungsweg des ersten Bypasses am zweiten Kolben bzw. am dritten Kolben entspricht. Dieses Spannen der ersten Feder ermöglicht, dass eine Anpassung an Druck und Temperatur in der zweiten Druckkammer aber auch in der ersten Druckkammer möglich ist.

Insbesondere ist die Kupplungsbetätigungsvorrichtung ein Ausrücksystem für eine Reibungskupplung eines Kraftfahrzeugs, wobei eine nicht selbsthemmende Kugelumlaufspindel als Gewindetrieb für die Welle vorgesehen ist, wobei bei ausgeschaltetem Motor die Reibungskupplung die Welle in der zweiten Richtung so verschiebt, dass der erste Bypass geöffnet ist.

Insbesondere befindet sich im Innenraum des Kraftfahrzeuges im Bereich des Fahrers eine Anwahleinrichtung für die automatische Betätigung der Kupplungsbetätigungsvorrichtung. Insbesondere ist zusätzlich eine Anzeige vorgesehen, die den Status des Aktors dem Fahrer anzeigen kann.

Die Ausführungen zu dem Verfahren gelten gleichermaßen für die Kupplungsbetätigungsvorrichtung und umgekehrt.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: eine erste Ausführungsvariante einer Kupplungsbetätigungsvorrichtung;
- Fig. 2:: einen Aktor in perspektivischer Ansicht, teilweise im Schnitt dargestellt;
- Fig. 3:: eine zweite Ausführungsvariante einer Kupplungsbetätigungsvorrichtung; und
- Fig. 4:: ein Kraftfahrzeug

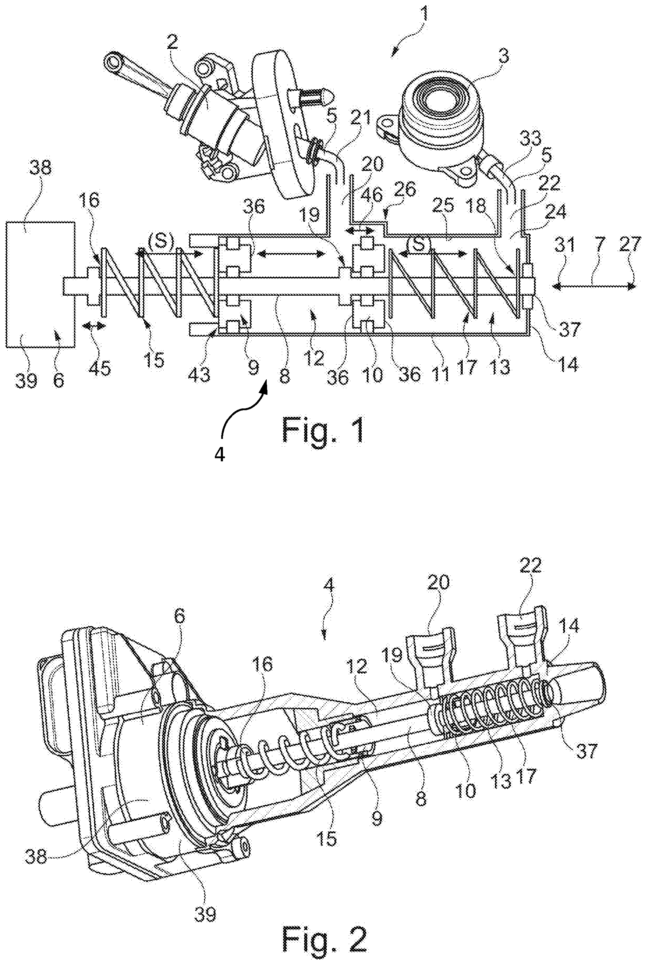

Fig. 1 zeigt eine erste Ausführungsvariante einer Kupplungsbetätigungsvorrichtung 1. Die Kupplungsbetätigungsvorrichtung 1 umfasst einen Geberzylinder 2 und einen Nehmerzylinder 3 sowie einen Aktor 4. Über den Aktor 4 sind Geberzylinder 2 und Nehmerzylinder 3 mit einer Druckleitung 5, 21, 23 für ein Fluid 40 verbunden. Der Aktor 4 weist eine durch einen Motor 6, z. B. ein Elektromotor, entlang einer axialen Richtung 7, 27, 31 hin und her bewegbare Welle 8 auf. Auf der Welle 8 sind zwei unabhängig von der Welle 8 bewegliche Kolben 9, 10 angeordnet, die in einem gemeinsamen Zylinder 11 entlang der axialen Richtung 7 verfahrbar sind. Eine erste Druckkammer 12 ist zwischen dem ersten Kolben 9 und dem zweiten Kolben 10 angeordnet und eine zweite Druckkammer 13 zwischen dem zweiten Kolben 10 und der Stirnwand 14 des Zylinders 11. Eine erste Feder 15 verbindet den ersten Kolben 9 und einen ersten Anschlag 16 an der Welle 8. Wird der erste Kolben 9 in der ersten Druckkammer 12 mit einem Druck beaufschlagt, bewegt sich der erste Kolben 9 entlang der zweiten Richtung 31 hin zu einem fünftem Anschlag 43. Über die erste Feder 15 und den ersten Anschlag 16 wird auch die Welle 8 in der zweiten Richtung 31 mitbewegt.

Weiter verbindet eine zweite Feder 17 den zweiten Kolben 10 mit einem zweiten Anschlag 18 an der Stirnwand 14 des Zylinders 11, wobei die zweite Feder 17 den zweiten Kolben 10 gegen einen dritten Anschlag 19 an der Welle 8 verschiebt.

Ein erster Anschluss 20 für eine erste Druckleitung 21 zum Geberzylinder 2 mündet in die erste Druckkammer 12 und ein zweiter Anschluss 22 für eine zweite Druckleitung 23 zum Nehmerzylinder 3 mündet in die zweite Druckkammer 13 in einem Bereich 24, der keine Dichtfläche 25 für den zweiten Kolben 10 bildet. Zwischen der ersten Druckkammer 12 und der zweiten Druckkammer 13 ist ein erster Bypass 26 vorgesehen, über den eine fluidtechnische Verbindung von Geberzylinder 2 und Nehmerzylinder 3 möglich ist, wobei der erste Bypass 26 verschließbar ist durch Verschieben der Welle 8 und des dritten Anschlags 19 und damit des zweiten Kolbens 13 entlang einer ersten Richtung 27.

Die hydraulischen Druckflächen 36 des ersten Kolbens 9 und des zweiten Kolbens 10 sind gleich groß. An der Stirnwand 14 des Zylinders 11 ist eine Öffnung 37 vorgesehen, durch die die Welle 8 sich erstreckt. Eine nicht selbsthemmende Kugelumlaufspindel 38 ist als Gewindetrieb 39 für die Welle 8 eingesetzt.

Eine manuelle Betätigung der Kupplungsbetätigungsvorrichtung 1 erfolgt, indem über eine Betätigung des Geberzylinders 2 (z. B. über Betätigung eines Kupplungspedals durch einen Fahrer) die erste Druckkammer 12 mit einem hydraulischem Fluid 40 beaufschlagt wird. Über den sich damit aufbauenden Druck in der ersten Druckkammer 12 wird der erste Kolben 9 und damit der erste Anschlag 16 sowie die Welle 8 und der dritte Anschlag 19 in einer zweiten Richtung 31 so verfahren, dass der erste Bypass 26 offen ist und eine fluidtechnische Verbindung von Geberzylinder 2 und Nehmerzylinder 3 gegeben ist. Das hydraulische Fluid 40 tritt so in die zweiten Druckkammer 13 ein, so dass sich dort der Druck aufbaut und der Nehmerzylinder 3 betätigt wird.

Sollte der Bypass 26 durch den zweiten Kolben 10 verschlossen sein, baut sich der Druck in ersten Druckkammer 12 auf und der zweite Kolben 10 wird weiter gegen die Wirkung der zweiten Feder 17 in der ersten axialen Richtung 27 verschoben. Eine manuelle Betätigung des Nehmerzylinders 3 ist also zu allen Zeitpunkten möglich.

Eine automatische Betätigung der Kupplungsbetätigungsvorrichtung 1 erfolgt, indem durch Betätigung des Motors 6 die Welle 8 und damit der dritte Anschlag 19 und der zweite Kolben 10 in der ersten Richtung 27 so verschoben wird, dass der erste Bypass 26 verschlossen wird. Bei einem weiteren verschieben des zweiten Kolbens 10 entlang der ersten Richtung 27 wird ein Fluid 40 aus der zweiten Druckkammer 13 hin zum Nehmerzylinder 3 überführt.

Durch die Betätigung des Nehmerzylinders 3 wird die Reibungskupplung 41 ausgerückt.

Die Kupplungsbetätigungsvorrichtung 1 ist also ein Ausrücksystem für eine Reibungskupplung 41 eines Kraftfahrzeugs, wobei eine nicht selbsthemmende Kugelumlaufspindel 38 als Gewindetrieb 39 für die Welle 8 vorgesehen ist, wobei bei ausgeschaltetem Motor 6 die Reibungskupplung 41 die Welle 8 in der zweiten Richtung 31 so verschiebt, dass der erste Bypass 26 geöffnet ist.

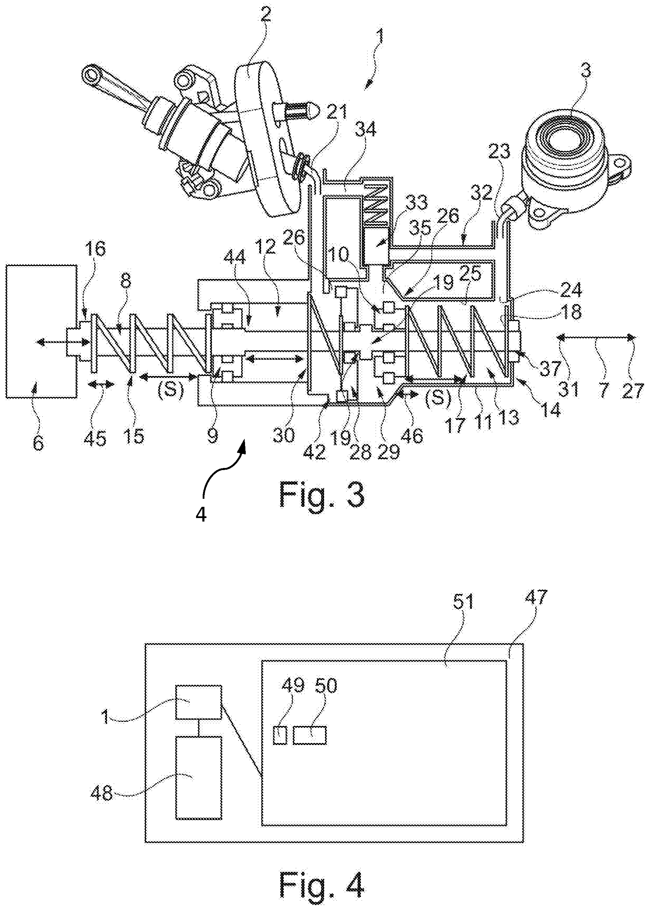

Die erste Feder 15 ist, wenn der erste Kolben 9 sich am fünften Anschlag 43 befindet, um eine Strecke 45 gespannt, wobei diese Strecke 45 dem Öffnungsweg 46 des ersten Bypasses 26am zweiten Kolben 10 (bzw. am dritten Kolben 28, siehe Fig. 3) entspricht. Dieses Spannen der ersten Feder 15 ermöglicht, dass eine Anpassung an Druck und Temperatur in der zweiten Druckkammer 13 aber auch in der ersten Druckkammer 12 möglich ist.

Fig. 2 zeigt einen Aktor 4 in perspektivischer Ansicht, teilweise im Schnitt dargestellt. Der Aktor 4 weist eine durch einen Motor 6, z. B. ein Elektromotor, entlang einer axialen Richtung 7, 27, 31 hin und her bewegbare Welle 8 auf. Auf der Welle 8 sind zwei unabhängig von der Welle 8 bewegliche Kolben 9, 10 angeordnet, die in einem gemeinsamen Zylinder 11 entlang der axialen Richtung 7 verfahrbar sind. Eine erste Druckkammer 12 ist zwischen dem ersten Kolben 9 und dem zweiten Kolben 10 angeordnet und eine zweite Druckkammer 13 zwischen dem zweiten Kolben 10 und der Stirnwand 14 des Zylinders 11. Eine erste Feder 15 verbindet den ersten Kolben 9 und einen ersten Anschlag 16 an der Welle 8. Wird der erste Kolben 9 in der ersten Druckkammer 12 mit einem Druck beaufschlagt, bewegt sich der erste Kolben 9 entlang der zweiten Richtung 31 hin zu einem fünftem Anschlag 43. Über die erste Feder 15 und den ersten Anschlag 16 wird auch die Welle 8 in der zweiten Richtung 31 mitbewegt. Ein erster Anschluss 20 für eine erste Druckleitung 21 zum Geberzylinder 2 mündet in die erste Druckkammer 12 und ein zweiter Anschluss 22 für eine zweite Druckleitung 23 zum Nehmerzylinder 3 mündet in die zweite Druckkammer 13 in einem Bereich 24, der keine Dichtfläche 25 für den zweiten Kolben 10 bildet. Zwischen der ersten Druckkammer 12 und der zweiten Druckkammer 13 ist ein erster Bypass 26 vorgesehen, über den eine fluidtechnische Verbindung von Geberzylinder 2 und Nehmerzylinder 3 möglich ist, wobei der erste Bypass 26 verschließbar ist durch Verschieben der Welle 8 und des dritten Anschlags 19 und damit des zweiten Kolbens 13 entlang einer ersten Richtung 27.

Fig. 3 zeigt eine zweite Ausführungsvariante einer Kupplungsbetätigungsvorrichtung 1. wobei zwischen dem ersten Kolben 9 und dem zweiten Kolben 10 ein dritter Kolben 28 beweglich auf der Welle 8 angeordnet ist und damit eine dritte Druckkammer 29 zwischen dem dritten Kolben 28 und dem zweiten Kolben 10 gebildet ist. Eine dritte Feder 30 verschiebt den dritten Kolben 28 gegen den dritten Anschlag 19. Der erste Bypass 26 ist verschließbar durch Verschieben der Welle 8 und des dritten Anschlags 19 und damit des dritten Kolbens 28 entlang der zweiten Richtung 31. Ein zweiter Bypass 32 ist zwischen der zweiten Druckleitung 23 und der dritten Druckkammer 29 vorgesehen, wobei dieser durch ein Überdruckventil 33 verschließbar ist. Der zweite Bypass 32 ist geöffnet, wenn ein erster Druck 34 in der ersten Druckleitung 21 um einen vorbestimmten Wert kleiner ist als ein zweiter Druck 35 in der dritten Druckkammer 29.

Eine manuelle Betätigung der Kupplungsbetätigungsvorrichtung 1 erfolgt, indem über eine Betätigung des Geberzylinders 2 (z. B. über Betätigung eines Kupplungspedals durch einen Fahrer) die erste Druckkammer 12 mit einem hydraulischem Fluid 40 beaufschlagt wird. Über den sich damit aufbauenden Druck in der ersten Druckkammer 12 wird der erste Kolben 9 und damit der erste Anschlag 16 sowie die Welle 8 und der dritte Anschlag 19 in einer zweiten Richtung 31 so verfahren, dass der erste Bypass 26 am zweiten Kolben 26 offen ist. Weiter ist durch die dritte Feder 30 der Bypass 26 am dritten Kolben 28 offen, so dass eine fluidtechnische Verbindung von Geberzylinder 2 und Nehmerzylinder 3 gegeben ist. Das hydraulische Fluid 40 tritt so über die dritte Druckkammer 29 in die zweite Druckkammer 13 ein, so dass sich dort der Druck aufbaut und der Nehmerzylinder 3 betätigt wird.

Sollte der Bypass 26 durch den zweiten Kolben 10 verschlossen sein, baut sich der Druck in ersten Druckkammer 12 auf und der zweite Kolben 10 wird weiter gegen die Wirkung der zweiten Feder 17 in der ersten axialen Richtung 27 verschoben. Eine manuelle Betätigung des Nehmerzylinders 3 ist also zu allen Zeitpunkten möglich.

Eine automatische Betätigung der Kupplungsbetätigungsvorrichtung 1 erfolgt, indem durch Betätigung des Motors 6 die Welle 8 und damit der dritte Anschlag 19 und der zweite Kolben 10 in der ersten Richtung 27 so verschoben wird, dass der erste Bypass 26 verschlossen wird. Bei einem weiteren verschieben des zweiten Kolbens 10 entlang der ersten Richtung 27 wird ein Fluid 40 aus der zweiten Druckkammer 13 hin zum Nehmerzylinder 3 überführt.

Wird die automatische Betätigung Im ausgekuppelten Zustand angewählt, wird zunächst die Welle 8 in die zweite Richtung 31 verfahren und über den dritten Anschlag 19 der dritte Kolben 28 gegen den vierten Anschlag 42 verfahren und so der Bypass 26 am dritten Kolben 28 geschlossen. Über ein Signal (an einer Anzeige 49) wird der Fahrer über den Zustand des Systems informiert, so dass dieser das Pedal der Reibungskupplung 41 und damit den Geberzylinder 2 entlasten kann. Nun liegt in der zweiten Druckkammer 13 und der dritten Druckkammer 29 ein höherer Druck als in der ersten Druckkammer 12 vor. Das Überdrückventil 33 öffnet in diesem Zustand, so dass der zweite Bypass 32 zwischen zweiter Druckkammer 13 und dritter Druckkammer 29 offen ist. Der dritte Kolben 28 bleibt so lange in der vorliegenden Position (am vierten Anschlag 42) bis der Fahrer mit dem Pedal eine manuelle Betätigung der Kupplungsbetätigungsvorrichtung 1 vornimmt oder bis die Kupplungsbetätigungsvorrichtung 1 die Welle 8 und damit den dritten Anschlag 19 so in die erste Richtung 27 verfährt, bis der zweite Kolben 10 genügend Fluid 40 über den zweiten Bypass 32 von der zweiten Druckkammer 13 in die dritte Druckkammer 29 verschoben hat. Ein sechster Anschlag 44 auf der Welle 8 ist so positioniert, dass, bei einer vorbestimmten Verschiebung von Fluid 40 von der zweiten Druckkammer 13 in die dritte Druckkammer 29, der dritte Kolben 28 von dem vierten Anschlag 42 abhebt und der erste Bypass 26 am dritten Kolben 28 geöffnet wird. In diesem Moment gibt es einen kurzen aber großen Druckabfall in der dritten Druckkammer 29 bis ein Druckausgleich mit der ersten Druckkammer 12 erfolgt ist. Infolge dieses Druckabfalls schließt das Überdruckventil 33. Nun ist der zweite Kolben 10 weiter in Position, so dass der erste Bypass 26 am zweiten Kolben 10 verschlossen ist und der Druck im Nehmerzylinder 3 durch den zweiten Kolben 10 gehalten wird.

Fig. 4 zeigt ein Kraftfahrzeug 47 mit einer Antriebseinheit 48 und einer Reibungskupplung 41. Im Innenraum 51 des Kraftfahrzeuges 47 befindet sich im Bereich des Fahrers eine Anwahleinrichtung 50 für die automatische Betätigung der Kupplungsbetätigungsvorrichtung 1. Es ist zusätzlich eine Anzeige 49 vorgesehen, die den Status des Aktors 4 dem Fahrer anzeigen kann.

### Bezugszeichenliste

- 1: Kupplungsbetätigungsvorrichtung
- 2: Geberzylinder
- 3: Nehmerzylinder
- 4: Aktor
- 5: Druckleitung
- 6: Motor
- 7: axiale Richtung
- 8: Welle
- 9: erster Kolben
- 10: zweiter Kolben
- 11: Zylinder
- 12: erste Druckkammer
- 13: zweite Druckkammer
- 14: Stirnwand
- 15: erste Feder
- 16: erster Anschlag
- 17: zweite Feder
- 18: zweiter Anschlag
- 19: dritter Anschlag
- 20: erster Anschluss
- 21: erste Druckleitung
- 22: zweiter Anschluss
- 23: zweite Druckleitung
- 24: Bereich
- 25: Dichtfläche
- 26: Bypass
- 27: erste Richtung
- 28: dritter Kolben
- 29: dritte Druckkammer
- 30: dritte Feder
- 31: zweite Richtung
- 32: zweiter Bypass
- 33: Überdruckventil
- 34: erster Druck
- 35: zweiter Druck
- 36: hydraulische Druckfläche
- 37: Öffnung
- 38: Kugelumlaufspindel
- 39: Gewindetrieb
- 40: Fluid
- 41: Reibungskupplung
- 42: vierter Anschlag
- 43: fünfter Anschlag
- 44: sechster Anschlag
- 45: Strecke
- 46: Öffnungsweg
- 47: Kraftfahrzeug
- 48: Antriebseinheit
- 49: Anzeige
- 50: Anwahleinrichtung
- 51: Innenraum

## Patentansprüche

1. Kupplungsbetätigungsvorrichtung (1), insbesondere ein Ausrücksystem für eine Reibungskupplung (41) eines Kraftfahrzeugs (47), mit einem Geberzylinder (2) und einem Nehmerzylinder (3) sowie einem Aktor (4), über den Geberzylinder (2) und Nehmerzylinder (3) mit einer Druckleitung (5, 21, 23) verbunden sind, wobei der Aktor (4) eine durch einen Motor (6) entlang einer axialen Richtung (7, 27, 31) hin und her bewegbare Welle (8) aufweist mit mindestens zwei beweglich darauf angeordneten Kolben (9, 10), die in einem gemeinsamen Zylinder (11) entlang der axialen Richtung (7) verfahrbar sind, wobei eine erste Druckkammer (12) zwischen erstem Kolben (9) und zweitem Kolben (10) und eine zweite Druckkammer (13) zwischen zweitem Kolben (10) und einer Stirnwand (14) des Zylinders (11) angeordnet sind; wobei eine erste Feder (15) den ersten Kolben (9) und einen ersten Anschlag (16) an der Welle (8) verbindet, und eine zweite Feder (17) den zweiten Kolben (10) mit einem zweiten Anschlag (18) an der Stirnwand (14) verbindet, wobei die zweite Feder (17) den zweiten Kolben (10) gegen einen dritten Anschlag (19) an der Welle (8) verschiebt; wobei ein erster Anschluss (20) für eine erste Druckleitung (21) zum Geberzylinder (2) in die erste Druckkammer (12) mündet und ein zweiter Anschluss (22) für eine zweite Druckleitung (23) zum Nehmerzylinder (3) in die zweite Druckkammer (13) in einem Bereich (24) mündet, der keine Dichtfläche (25) für den zweiten Kolben (10) bildet; wobei zwischen der ersten Druckkammer (12) und der zweiten Druckkammer (13) ein erster Bypass (26) vorgesehen ist, über den eine fluidtechnische Verbindung von Geberzylinder (2) und Nehmerzylinder (3) möglich ist, wobei der erste Bypass (26) verschließbar ist durch Verschieben der Welle (8) und des dritten Anschlags (19) und damit des zweiten Kolbens (10) entlang einer ersten Richtung (27).

2. Kupplungsbetätigungsvorrichtung (1) nach Anspruch 1, wobei zwischen dem ersten Kolben (9) und dem zweiten Kolben (10) ein dritter Kolben (28) beweglich auf der Welle (8) angeordnet ist und damit eine dritte Druckkammer (29) zwischen dem dritten Kolben (28) und dem zweiten Kolben (10) gebildet ist; wobei eine dritte Feder (30) den dritten Kolben (28) gegen den dritten Anschlag (19) verschiebt; wobei der erste Bypass (26) verschließbar ist durch Verschieben der Welle (8) und des dritten Anschlags (19) und damit des dritten Kolbens (28) entlang einer entgegengesetzten zweiten Richtung (31); wobei ein zweiter Bypass (32) zwischen der zweiten Druckleitung (23) und der dritten Druckkammer (29) vorgesehen ist, der durch ein Überdruckventil (33) verschließbar ist, wobei der zweite Bypass (32) geöffnet ist, wenn ein erster Druck (34) in der ersten Druckleitung (21) um einen vorbestimmten Wert kleiner ist als ein zweiter Druck (35) in der dritten Druckkammer (29).

3. Kupplungsbetätigungsvorrichtung (1) nach einem der vorhergehenden Ansprüche, wobei hydraulische Druckflächen (36) des ersten Kolbens (9) und des zweiten Kolbens (10) gleich groß sind.

4. Kupplungsbetätigungsvorrichtung (1) nach einem der vorhergehenden Ansprüche, wobei an der Stirnwand (14) des Zylinders (11) eine Öffnung (37) vorgesehen ist, durch die die Welle (8) sich erstreckt.

5. Kupplungsbetätigungsvorrichtung (1) nach einem der vorhergehenden Ansprüche, wobei eine nicht selbsthemmende Kugelumlaufspindel (38) als Gewindetrieb (39) für die Welle (8) vorgesehen ist.

6. Verfahren zur Kupplungsbetätigung, zumindest aufweisend eine Kupplungsbetätigungsvorrichtung (1) nach einem der vorhergehenden Ansprüche, wobei eine manuelle Betätigung der Kupplungsbetätigungsvorrichtung (1) erfolgt, indem über eine Betätigung des Geberzylinders (2) der erste Kolben (9) und damit der erste Anschlag (16) sowie die Welle (8) und der dritte Anschlag (19) in einer zweiten Richtung (31) so verfahren wird, dass der erste Bypass (26) offen ist und eine fluidtechnische Verbindung von Geberzylinder (2) und Nehmerzylinder (3) gegeben ist.

7. Verfahren nach Anspruch 6, wobei eine automatische Betätigung der Kupplungsbetätigungsvorrichtung (1) erfolgt, indem die Welle (8) und damit der dritte Anschlag (19) und der zweite Kolben (10) in der ersten Richtung (27) so verschoben wird, dass der erste Bypass (26) verschlossen wird, so dass bei einem weiteren Verschieben entlang der ersten Richtung (27) ein Fluid (40) aus der zweiten Druckkammer (13) hin zum Nehmerzylinder (3) überführt wird.

8. Verfahren nach einem der Ansprüche 6 oder 7, wobei die Kupplungsbetätigungsvorrichtung (1) ein Ausrücksystem für eine Reibungskupplung (41) eines Kraftfahrzeugs (47) ist, wobei eine nicht selbsthemmende Kugelumlaufspindel (38) als Gewindetrieb (39) für die Welle (8) vorgesehen ist, wobei bei ausgeschaltetem Motor (6) die Reibungskupplung (41) die Welle (8) in der zweiten Richtung (31) so verschiebt, dass der erste Bypass (26) geöffnet ist.

## Claims

1. Clutch actuation device (1), in particular a release system for a friction clutch (41) of a motor vehicle (47), having a master cylinder (2) and a slave cylinder (3) and also an actuator (4) by means of which master cylinder (2) and slave cylinder (3) are connected to a pressure line (5, 21, 23), wherein the actuator (4) has a shaft (8) which is movable back and forth along an axial direction (7, 27, 31) by means of a motor (6), and having at least two pistons (9, 10) which are arranged movably on said shaft and which are displaceable in a common cylinder (11) along the axial direction (7), wherein a first pressure chamber (12) is arranged between first piston (9) and second piston (10), and a second pressure chamber (13) is arranged between second piston (10) and an end wall (14) of the cylinder (11); wherein a first spring (15) connects the first piston (9) and a first stop (16) on the shaft (8), and a second spring (17) connects the second piston (10) to a second stop (18) on the end wall (14), wherein the second spring (17) displaces the second piston (10) against a third stop (19) on the shaft (8); wherein a first port (20) for a first pressure line (21) to the master cylinder (2) opens into the first pressure chamber (12), and a second port (22) for a second pressure line (23) to the slave cylinder (3) opens into the second pressure chamber (13) in a region (24) which does not form a sealing surface (25) for the second piston (10), wherein, between the first pressure chamber (12) and the second pressure chamber (13), there is provided a first bypass (26) by means of which a fluidic connection of master cylinder (2) and slave cylinder (3) is possible, wherein the first bypass (26) is closable by displacement of the shaft (8) and of the third stop (19) and thus of the second piston (10) along a first direction (27).

2. Clutch actuation device (1) according to Claim 1, wherein, between the first piston (9) and the second piston (10), a third piston (28) is arranged movably on the shaft (8), and thus a third pressure chamber (29) is formed between the third piston (28) and the second piston (10); wherein a third spring (30) displaces the third piston (28) against the third stop (19); wherein the first bypass (26) is closable by displacement of the shaft (8) and of the third stop (19) and thus of the third piston (28) along an opposite, second direction (31) ; wherein, between the second pressure line (23) and the third pressure chamber (29), there is provided a second bypass (32) which is closable by means of an overpressure valve (33), wherein the second bypass (32) is opened if a first pressure (34) in the first pressure line (21) is lower, by a predetermined value, then a second pressure (35) in the third pressure chamber (29).

3. Clutch actuation device (1) according to one of the preceding claims, wherein hydraulic pressure surfaces (36) of the first piston (9) and of the second piston (10) are of equal size.

4. Clutch actuation device (1) according to one of the preceding claims, wherein, on the end wall (14) of the cylinder (11), there is provided an opening (37) through which the shaft (8) extends.

5. Clutch actuation device (1) according to one of the preceding claims, wherein a non-self-locking recirculating ball spindle (38) is provided as a screw drive (39) for the shaft (8).

6. Method for clutch actuation, at least having a clutch actuation device (1) according to one of the preceding claims, wherein a manual actuation of the clutch actuation device (1) is performed in that, by means of an actuation of the master cylinder (2), the first piston (9) and thus the first stop (16) and also the shaft (8) and the third stop (19) are displaced in a second direction (31) such that the first bypass (26) is open and a fluidic connection of master cylinder (2) and slave cylinder (3) is realized.

7. Method according to Claim 6, wherein an automatic actuation of the clutch actuation device (1) is performed in that the shaft (8) and thus the third stop (19) and the second piston (10) are displaced in the first direction (27) such that the first bypass (26) is closed, such that, during a further displacement along the first direction (27), a fluid (40) is transferred out of the second pressure chamber (13) towards the slave cylinder (3).

8. Method according to either of Claims 6 and 7, wherein the clutch actuation device (1) is a release system for a friction clutch (41) of a motor vehicle (47), wherein a non-self-locking recirculating ball spindle (38) is provided as a screw drive (39) for the shaft (8), wherein, when the motor (6) is deactivated, the friction clutch (41) displaces the shaft (8) in the second direction (31), such that the first bypass (26) is opened.

## Revendications

1. Dispositif d'actionnement d'embrayage (1), en particulier système de débrayage pour un embrayage à friction (41) d'un véhicule automobile (47), comprenant un maître-cylindre (2) et un cylindre récepteur (3) ainsi qu'un actionneur (4), par le biais duquel le maître-cylindre (2) et le cylindre récepteur (3) sont connectés par une conduite de pression (5, 21, 23), l'actionneur (4) présentant un arbre (8) pouvant être déplacé en va et vient par un moteur (6) le long d'une direction axiale (7, 27, 31) avec au moins deux pistons (9, 10) disposés de manière déplaçable sur celui-ci, lesquels peuvent être déplacés dans un cylindre commun (11) le long de la direction axiale (7), une première chambre de pression (12) étant disposée entre le premier piston (9) et le deuxième piston (10) et une deuxième chambre de pression (13) étant disposée entre le deuxième piston (10) et une paroi frontale (14) du cylindre (11) ; un premier ressort (15) reliant le premier piston (9) à une première butée (16) sur l'arbre (8), et un deuxième ressort (17) reliant le deuxième piston (10) à une deuxième butée (18) sur la paroi frontale (14), le deuxième ressort (17) déplaçant le deuxième piston (10) contre une troisième butée (19) sur l'arbre (8) ; un premier raccord (20) pour une première conduite de pression (21) allant au maître-cylindre (2) débouchant dans la première chambre de pression (12) et un deuxième raccord (22) pour une deuxième conduite de pression (23) allant au cylindre récepteur (3) débouchant dans la deuxième chambre de pression (13) dans une région (24) qui ne forme pas de surface d'étanchéité (25) pour le deuxième piston (10) ; entre la première chambre de pression (12) et la deuxième chambre de pression (13) étant prévue une première dérivation (26) par le biais de laquelle une liaison fluidique technique du maître-cylindre (2) au cylindre récepteur (3) est possible, la première dérivation (26) pouvant être fermée par déplacement de l'arbre (8) et de la troisième butée (19) et par conséquent du deuxième piston (10) le long d'une première direction (27).

2. Dispositif d'actionnement d'embrayage (1) selon la revendication 1, dans lequel, entre le premier piston (9) et le deuxième piston (10), est disposé de manière déplaçable sur l'arbre (8) un troisième piston (28) et de ce fait, une troisième chambre de pression (29) est formée entre le troisième piston (28) et le deuxième piston (10) ; un troisième ressort (30) déplaçant le troisième piston (28) contre la troisième butée (19) ; la première dérivation (26) pouvant être fermée par déplacement de l'arbre (8) et de la troisième butée (19) et par conséquent du troisième piston (28) le long d'une deuxième direction opposée (31) ; une deuxième dérivation (32) étant prévue entre la deuxième conduite de pression (23) et la troisième chambre de pression (29), laquelle peut être fermée par une soupape de surpression (33), la deuxième dérivation (32) étant ouverte lorsqu'une première pression (34) dans la première conduite de pression (21) est inférieure d'une valeur prédéterminée à une deuxième pression (35) dans la troisième chambre de pression (29).

3. Dispositif d'actionnement d'embrayage (1) selon l'une quelconque des revendications précédentes, dans lequel des surfaces de pression hydrauliques (36) du premier piston (9) et du deuxième piston (10) sont identiques.

4. Dispositif d'actionnement d'embrayage (1) selon l'une quelconque des revendications précédentes, dans lequel une ouverture (37) à travers laquelle s'étend l'arbre (8) est prévue au niveau de la paroi frontale (14) du cylindre (11).

5. Dispositif d'actionnement d'embrayage (1) selon l'une quelconque des revendications précédentes, dans lequel une broche à circulation de bille non autobloquante (38) est prévue en tant qu'entraînement à vis (39) pour l'arbre (8).

6. Procédé pour l'actionnement d'un embrayage, présentant au moins un dispositif d'actionnement d'embrayage (1) selon l'une quelconque des revendications précédentes, un actionnement manuel du dispositif d'actionnement d'embrayage (1) se produisant par le fait que le premier piston (9) et par conséquent la première butée (16) ainsi que l'arbre (8) et la troisième butée (19) sont déplacés dans une deuxième direction (31) par le biais d'un actionnement du maître-cylindre (2), de telle sorte que la première dérivation (26) soit ouverte et qu'une liaison fluidique technique du maître-cylindre (2) au cylindre récepteur (3) soit réalisée.

7. Procédé selon la revendication 6, dans lequel un actionnement automatique du dispositif d'actionnement d'embrayage (1) a lieu par le fait que l'arbre (8) et par conséquent la troisième butée (19) et le deuxième piston (10) sont déplacés dans la première direction (27) de telle sorte que la première dérivation (26) soit fermée, de telle sorte que dans le cas d'un déplacement supplémentaire le long de la première direction (27), un fluide (40) soit transféré de la deuxième chambre de pression (13) vers le cylindre récepteur (3).

8. Procédé selon l'une quelconque des revendications 6 ou 7, dans lequel le dispositif d'actionnement d'embrayage (1) est un système de débrayage pour un embrayage à friction (41) d'un véhicule automobile (47), une broche à circulation de bille non autobloquante (38) étant prévue en tant qu'entraînement à vis (39) pour l'arbre (8), l'embrayage à friction (41) déplaçant l'arbre (8) dans la deuxième direction (31) lorsque le moteur (6) est coupé, de telle sorte que la première dérivation (26) soit ouverte.
